# EUROPEAN PATENT APPLICATION

(11) **EP 4 309 909 A1**
(43) Date of publication of application: **24.01.2024**
(21) Application number: 23186551.0
(22) Date of filing: 19.07.2023
(51) Int. Cl.: B41M 7/00, B44C 3/02, B41M 5/00

(54) **IMAGE FORMING METHOD, IMAGE-FORMED ARTICLE MANUFACTURING METHOD, AND IMAGE FORMING SYSTEM**

(30) Priority: 20.07.2022 JP 2022115211
(71) Applicant: Brother Kogyo Kabushiki Kaisha, Nagoya, Aichi 467-8561 (JP)
(72) Inventor: SAKAGUCHI, Ai, Nagoya, 467-8562 (JP); MIZUNO, Nao, Nagoya, 467-8562 (JP)
(74) Representative: Prüfer & Partner mbB Patentanwälte · Rechtsanwälte

(57) **Abstract**

An image forming method includes an image forming step of applying water-based ink to a first region of an object to be subjected to image forming by an inkjet method; a resin powder applying step of applying a resin powder to a second region of the object, the first region and the second region at least partially overlapping each other; and a thermal fixing step of applying heat to the first region and the second region to thermally fix the water-based ink and the resin powder to the object, wherein the water-based ink contains a pigment and at least one of a water-soluble resin and a resin emulsion.

## Description

### TECHNICAL FIELD

The present invention relates to an image forming method, image-formed article manufacturing method, and image forming system.

### BACKGROUND ART

Conventionally, an image forming method is known in which an overcoat solution is dispensed onto a printed surface of print matter to form a film in order to enhance the abrasion resistance of the printed matter (Patent Document 1).

### CITATION LIST

### PATENT DOCUMENTS

Patent Document 1: Japanese Unexamined Patent Application Publication No. 2003-053942

### SUMMARY OF THE INVENTION

### PROBLEM TO BE SOLVED BY THE INVENTION

However, the image forming method using a liquid overcoat agent as described above has a problem with bleeding occurring in the formed image. In addition, the liquid overcoat agent spreads wet on the image surface, and thus does not provide sufficient abrasion resistance.

Thus, an object of the present invention is to provide an image forming method, image-formed article manufacturing method, and image forming system, without bleeding and with excellent abrasion resistance.

### MEANS FOR SOLVING THE PROBLEM

In order to achieve the aforementioned object, the image forming method of the present invention includes an image forming step of applying water-based ink to an object to be subjected to image forming by an inkjet method, a resin powder applying step of applying a resin powder to a region where the water-based ink has been applied, and a thermal fixing step of applying heat to the region where the water-based ink has been applied and a region where the resin powder has been applied, to thermally fix the water-based ink and the resin powder to the object, wherein the water-based ink contains a pigment, and at least one of a water-soluble resin and a resin emulsion.

### EFFECT OF THE INVENTION

The image forming method, method of manufacturing an image-formed article, and image forming system of the present invention can form images that are free from bleeding and have excellent abrasion resistance.

### BRIEF DESCRIPTION OF THE DRAWINGS

FIG. 1 is a schematic perspective view depicting an example of an inkjet recording device in an image forming system according to the present invention.
FIG. 2 is a schematic view depicting an example of a laser printer (electrophotographic method) in an image forming system according to the present invention.

### EMBODIMENTS OF THE INVENTION

In the present invention, "mass" may be read as "weight" unless otherwise specified. For example, unless otherwise specified, "mass ratio" may be read as "weight ratio" and "mass %" may be read as "weight %."

The image forming method of the present invention is described below. The image forming method according to the present invention includes a resin powder applying step that applies a resin powder to an object to be subjected to image forming; an image forming step that uses an inkjet method to apply a water-based ink to an area in which the resin powder was applied; and a thermal fixing step that applies heat to the area in which the resin powder was applied and the area in which the water-based ink was applied to fix the resin powder and the water-based ink to the object wherein the water-based ink contains a pigment and at least one of a water-soluble resin and a resin emulsion.

In the present invention, "pigment" includes, at least, either a "resin dispersed pigment" or a "self-dispersing pigment" unless otherwise specified. The resin dispersed pigment is, for example, a pigment in which a pigment particle can be dispersed in a solvent by a resin dispersing agent. Additionally, the self-dispersing pigment is one in which pigment particles can be dispersed in a solvent without using a resin dispersing agent.

Examples of the resin dispersed pigment include carbon black, inorganic pigments, organic pigments, and the like. Examples of the above carbon black include furnace black, lamp black, acetylene black, channel black, and the like. Examples of the above inorganic pigments include titanium oxide, iron oxide-based inorganic pigments, carbon black-based inorganic pigments, and the like. Examples of the above organic pigments include azo pigments such as azo lakes, insoluble azo pigments, condensed azo pigments, and chelate azo pigments, and the like; polycyclic pigments such as phthalocyanine pigments, perylene and perinone pigments, anthraquinone pigments, quinacridone pigments, dioxazine pigments, thioindigo pigments, isoindolinone pigments, quinophthalone pigments, and the like; dye lake pigments such as basic dye lake pigments, acid dye lake pigments, and the like; nitro pigments; nitroso pigments; and aniline black daylight fluorescent pigments, and the like. Any other pigment that is dispersible in the aqueous phase may also be used. Specific examples of these pigments include C. I. Pigment Black 1, 6 and 7; C. I. Pigment Yellow 1, 2, 3, 12, 13, 14, 15, 16, 17, 55, 74, 78, 150, 151, 154, 180, 185, and 194; C.I. pigment orange 31 and 43; C.I. pigment red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. pigment violet 19 and 196; C.I. pigment blue 1, 2, 3, 15, 15:1, 15:2, 15:3, 15:4, 16, 22, and 60; C.I. pigment green 7 and 36; as well as solid solutions of these pigments, and the like.

For example, a general polymer dispersing agent (also referred to as a pigment dispersing resin, a resign dispersing agent, or the like) may be used as the resin dispersing agent, or the agent may be prepared in-house. Furthermore, the pigment may be one that is encapsulated by a polymer in the water-based ink according to the present invention. For example, an agent containing at least a methacrylic acid or an acrylic acid as a monomer, for example, a commercially available agent, may be used as the resin dispersing agent. For example, the resin dispersing agent may be a hydrophobic monomer such as styrene, a styrene derivative, vinylnaphthalene, a vinylnaphthalene derivative, an aliphatic alcohol ester of α,β-ethylenically unsaturated carboxylic acid, and the like; or a block copolymer, a graft copolymer, or a random copolymer consisting of two or more monomers selected from a group consisting of acrylic acid, acrylic acid derivatives, maleic acid, maleic acid derivatives, itaconic acid, itaconic acid derivatives, fumaric acid, and fumaric acid derivatives; or salts of these, and the like. Examples of the above commercially available agent include "Joncryl^{®} 611," "Joncryl^{®} 60," "Joncryl^{®} 586," "Joncryl^{®} 687," "Joncryl^{®} 63," and "Joncryl^{®} HPD296"manufactured by Johnson Polymers, Co., Ltd.; "Disperbyk 190" and "Disperbyk 191" manufactured by BYK Chemie Co., Ltd.; and "Solsperse 20000" and "Solsperse 27000" manufactured by Zeneca Co., Ltd., and the like.

Examples of methods for dispersing the pigment using the pigment dispersing resin include dispersing the pigment using a dispersing device. The dispersing device used to disperse the pigment may be any general dispersing machine, and examples include a ball mill, a roll mill, a sand mill (for example, a high speed model), or the like.

The self-dispersing type pigment is a pigment that is made dispersible in water without the use of dispersants by introducing, for example, at least one type of hydrophilic functional group such as a carbonyl group, hydroxyl group, carboxylic acid group, sulfonic acid group, phosphoric acid group, and the like, and salts of these, in pigment particles through chemical bonding, either directly or through another group. A pigment processed using the method disclosed in, for example, Japanese Unexamined Patent Application Publication No. H08-3498, Japanese Unexamined Patent Application Publication (Translation of PCT Application) No. 2000-513396, Japanese Unexamined Patent Application Publication (Translation of PCT Application) No. 2008-524400, Japanese Unexamined Patent Application Publication (Translation of PCT Application) No. 2009-515007, and Japanese Unexamined Patent Application Publication (Translation of PCT Application) No. 2011-515535, or the like may be used as the self-dispersing type pigment. An inorganic pigment or an organic pigment may be used as raw material for the self-dispersing type pigment. Furthermore, examples of pigments suitable for performing the above processing include carbon black, and the like, such as "MA8," "MA100," and the like, manufactured by Mitsubishi Chemical Co., Ltd. The self-dispersing type pigment may also be, for example, a commercially available product. Examples of the commercially available products include "CAB-O-JET^{®} 200," "CAB-O-JET^{®} 250C," "CAB-O-JET^{®} 260M," "CAB-O-JET^{®} 270Y," "CAB-O-JET^{®} 300," "CAB-O-JET^{®} 400," "CAB-O-JET^{®} 450C," "CAB-O-JET^{®} 465M," and "CAB-O-JET^{®} 470Y" manufactured by Cabot Corporation; "BONJET^{®} BLACK CW-2," and "BONJET^{®} BLACK CW-3" manufactured by Orient Chemical Industries Co., Ltd.; "LIOJET^{®} WD BLACK 002C" manufactured by Toyo Ink Manufacturing Co., Ltd., and the like.

A pigment solid content of the pigment in the total amount of the water-based ink is, for example, 0.5 mass% to 20 mass%, preferably 1 mass% to 10 mass%, and more preferably 3 mass% to 5 mass%.

The aqueous ink contains at least one of a water-soluble resin and a resin emulsion.

Examples of the water-soluble resin include resins having structures with relatively high hydrophilic contents and that are soluble in water. Examples of the water-soluble resin include urethane resins, polyester resins, acrylic resins, alkyd resins, styrene-maleic acid copolymers, cellulose derivatives, polyvinylpyrrolidone, polyvinyl alcohol, and the like. Either one type of these water-soluble resins may be used alone, or two or more types thereof may be used together. The water-soluble resin is preferably a urethane resin, polyester resin, or acrylic resin, for example.

The resin emulsion is, for example, configured of fine resin particles and a dispersing medium (for example, water), and the fine resin particles are not dissolved in the dispersing medium, but dispersed with a specific particle size. The aforementioned resin emulsion includes, for example, acrylic resins, urethane resins, polyester resins, polystyrene resins, polyethylene resins, vinyl chloride resins, and the like. Either one type of these resin emulsions may be used alone, or two or more types thereof may be used together. Preferred examples of the water-based resin emulsion include urethane resins, polyester resins, acrylic resins, and the like.

The resin emulsion may be, for example, a commercially available one. Examples of those that are commercially available include the polycarbonate urethane resin emulsions "SuperFlex^{®} 460" manufactured by DKS Co., Ltd., "TAKELAC^{®} W-6110" manufactured by Mitsui Chemicals Co., Ltd., and "HYDRAN^{®} WLS-210" manufactured by DIC Co., Ltd., and the like; the polyester urethane resin emulsions "UCOAT^{®} UWS-145" manufactured by Sanyo Chemical Industries, Ltd., "TAKELAC^{®} W-5030" manufactured by Mitsui Chemicals Co., Ltd., and "HYDRAN^{®} HW-920" manufactured by DIC Co., Ltd., and the like; and the polyether urethane resin emulsions "TAKELAC^{®} W-6061T" manufactured by Mitsui Chemicals Co., Ltd., and "HYDRAN^{®} FCS-855" and "HYDRAN^{®} WLS-201" manufactured by DIC Co., Ltd., and the like.

A solid content of the resin emulsion in the total amount of the water-based ink is, for example, 1 mass% to 20 mass%, preferably 5 mass% to 10 mass%, and more preferably 7 mass% to 10 mass%.

The water-based ink may also contain water, a surfactant, wetting agent, penetrant, pH adjusting agent, viscosity modifying agent, surface tension modifying agent, antifungal agent, cross-linking agent, and the like.

It is preferable that the water be deionized water or pure water. The amount of the water contained in the total amount of the water-based ink is, for example, 10 mass% to 90 mass%, and preferably 20 mass% to 80 mass%. An amount of contained water may be, for example, the balance of other components.

Examples of the surfactant include nonionic surfactants. The nonionic surfactant may also be, for example, a commercially available product. Examples of commercially available products include "OLFINE^{®} E1004," "OLFINE^{®} E1006," and "OLFINE^{®} E1010" manufactured by Nissin Chemical Co., Ltd., and the like.

An amount of the nonionic surfactant contained in the total amount of the water-based ink is, for example, 0.1 mass% to 2 mass%, preferably 0.3 mass% to 1.5 mass%, and more preferably 0.5 mass% to 1 mass%.

The surfactant may also contain surfactants other than nonionic surfactants (for example, anionic surfactants, cationic surfactants, amphoteric surfactants, and the like), however, a nonionic surfactant alone may be used as the surfactant.

Examples of the wetting agent include lower alcohols such as methyl alcohol, ethyl alcohol, n-propyl alcohol, isopropyl alcohol, n-butyl alcohol, sec-butyl alcohol, tert-butyl alcohol, and the like; amides such as dimethylformamide, dimethylacetamide, and the like; ketones such as acetone, and the like; ketoalcohols such as diacetone alcohol, and the like; ethers such as tetrahydrofuran, dioxane, and the like; polyethers such as polyalkylene glycol, and the like; polyhydric alcohols such as alkylene glycol, glycerin, trimethylolpropane, trimethylolethane, and the like; 2-pyrrolidone; N-methyl-2-pyrrolidone; 1,3-dimethyl-2-imidazolidinone; and the like. Examples of the polyalkylene glycol include polyethylene glycol, polypropylene glycol, and the like. Examples of the alkylene glycol include ethylene glycol, propylene glycol, butylene glycol, diethylene glycol, triethylene glycol, dipropylene glycol, tripropylene glycol, thiodiglycol, hexylene glycol, and the like. Either one type of these wetting agents may be used alone, or two or more types thereof may be used together. Among these, polyhydric alcohols such as alkylene glycol, glycerin, and the like, are preferred.

An amount of the wetting agent contained in the total amount of the water-based ink is, for example, 1 mass% to 30 mass%, preferably 5 mass% to 20 mass%, and more preferably 10 mass% to 15 mass%.

Examples of the penetrant include glycol ether compounds and alkylene diols. Examples of the glycol ether compounds include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, and the like. Examples of alkylene diols include 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,3-propanediol, 1,2-butanediol, 1,2-pentanediol, 1,4-butanediol, 1,5-pentanediol, 1,6-hexane diol, 2-methyl-2,4-pentanediol, 3-methyl-1,5-pentanediol, and the like. Either one type of these penetrants may be used alone, or two or more types thereof may be used together.

The amount of the penetrant contained in the total amount of the water-based ink is, for example, 0 mass% to 20 mass%, preferably 0 mass% to 15 mass%, and more preferably 1 mass% to 6 mass%.

In the present invention, "resin powder" refers to a powder containing resin as a main component. The resin powder may contain, for example, components such as a binder resin, a release agent, a charge control agent, an external additive, and the like. Note that there are substances containing binder resins, release agents, charge control agents, external additives, pigments, and the like, that are used as toners for printing, and that resin powder may be obtained by removing the pigments from such toners.

The binder resin may be, for example, a thermoplastic resin. The thermoplastic resin is not particularly limited, and examples include polyester resins, and the like. The polyester resin may have an acid value of, for example, 0.5 to 40 mg KOH/g, and preferably 1.0 to 20 mg KOH/g. Furthermore, a weight average molecular weight (according to GPC measurement using standard polystyrene as a calibration curve) thereof may be, for example, 9,000 to 200,000, and preferably 20,000 to 150,000. Additionally, a gel portion (THF insoluble matter) thereof may be, for example, 10 mass% or less, and preferably 0.5 to 10 mass%. Moreover, a glass transition point (Tg) thereof may be, for example, 50 to 70°C, and preferably 55 to 65°C. Specific examples of commercially available polyester resins include FC1565 (manufactured by Mitsubishi Rayon), FC023 (manufactured by Mitsubishi Rayon), and the like. The water-based ink used in the image forming method of the present invention contains at least one of water soluble resins and resin emulsions, as described above. These are added in consideration of fixability to the aforementioned object to be subjected to image forming, but heating (thermal fixing) is required for fixing. If, for example, a thermosetting resin is used as the binder resin, the thermosetting resin will not melt, so an overcoat cannot be applied. Therefore, it is preferable to include the aforementioned thermoplastic resin that melts during thermal fixing as the binder resin.

Examples of the release agent include polyolefin wax, long-chain hydrocarbon wax, and ester wax.

The charge control agent provides chargeability to the resin powder. The aforementioned chargeability may be either positive or negative. Examples of the charge control agent include nigrosine dyes, triphenylmethane dyes, chromium-containing metal complex dyes, molybdate chelate pigments, rhodamine dyes, alkoxy amines, quaternary ammonium salts (including fluorine modified quaternary ammonium salts), alkyl amides, phosphorus alone or in compounds, tungsten alone or in compounds, fluorinated activators, metal salts of salicylic acid, metal salts of salicylic acid derivatives, and the like. Copper phthalocyanine, perylene, quinacridone, azo pigments, and the like are also possible. Furthermore, polymeric compounds having functional groups such as sulfonate groups, carboxylate groups, quaternary ammonium salts, and the like can also be suggested.

The added ratio of the charge control agent is, for example, 0.1 mass part or more, preferably 1 mass part or more, and for example 20 mass parts or less, preferably 10 mass parts or less, with regard to 100 mass parts of binding resin.

The external additive adjusts the chargeability, flowability, and storage stability of the resin powder. The external additive includes, for example, inorganic particles, synthetic resin particles, and the like.

Examples of the inorganic particles include silica, aluminum oxide, titanium oxide, silicon aluminum co-oxide, silicon titanium co-oxide, and hydrophobically treated products thereof. The hydrophobically treated silica can be obtained, for example, by treating silica fine powder with silicone oil or a silane coupling agent such as dichlorodimethylsilane, hexamethyldisilazane, tetramethyldisilazane, and the like.

Examples of the synthetic resin particles include methacrylic ester polymer particles, acrylic ester polymer particles, styrene-methacrylic ester copolymer particles, styrene-acrylic ester copolymer particles, and core-shell particles in which the core is a styrene polymer and the shell is a methacrylic ester polymer.

The particle size of the external additive is smaller than the particle size of the binder resin. The particle size of the external additive is, for example, 2 µm or less, preferably 0.1 µm or less, and even more preferably 0.03 µm or less.

The added ratio of the external additive is, for example, 0.1 mass parts or more and for example 10 mass parts or less, to 100 mass parts of the binder resin.

Alower limit of the amount of the water-based ink applied is, for example, 0.004 mg/cm² or more, 0.04 mg/cm² or more, or 0.4 mg/cm² or more. An upper limit of the amount of the water-based ink applied is, for example, 24 mg/cm² or less, 12 mg/cm² or less, 8 mg/cm² or less, or 4 mg/cm² or less. Note that the upper limit of the applied amount of the water-based ink is preferably 4 mg/cm² or less, from the viewpoint of bleeding of the water-based ink.

A lower limit of the amount of the resin powder applied is, for example, 0.1 mg/cm² or more. The upper limit of the amount of the resin powder applied is, for example, 1.2 mg/cm² or less. The present inventors have found that a sufficient OD value cannot be obtained when the amount of the resin powder applied is less than 0.1 mg/cm². Furthermore, from the viewpoint of controlling amounts consumed, the smaller the amount of the resin powder applied, the better. For these reasons, it is preferable that the amount of the resin powder applied be 0.1 mg/cm² or more.

The ratio (X/Y) between the amount (X) of applied water-based ink and the amount (Y) of applied resin powder is, for example, 0.04 to 240, preferably 0.04 to 80, more preferably 0.4 to 80, and even more preferably 40 to 80.

Examples of the object to be subjected to image forming include recording media such as fabric, paper, or the like.

The fabric may include both knitted and woven fabrics. Examples of the material of the fabric include natural fibers and synthetic fibers. Examples of the natural fibers include cotton, silk, and the like. The material of the fabric may be, for example, a blend spun by mixing a plurality of types of the natural fibers, or a blend spun by mixing the natural fibers and the synthetic fibers. Examples of the synthetic fibers include polyester, acrylic, rayon, urethane, nylon, and the like. Examples of a blend of the natural fibers and the synthetic fibers include a 50%/50% blend of cotton and polyester, and the like.

Examples of the recording medium include plain paper, glossy paper, matte paper, coated paper, synthetic paper, paperboard, cardboard, film, and the like.

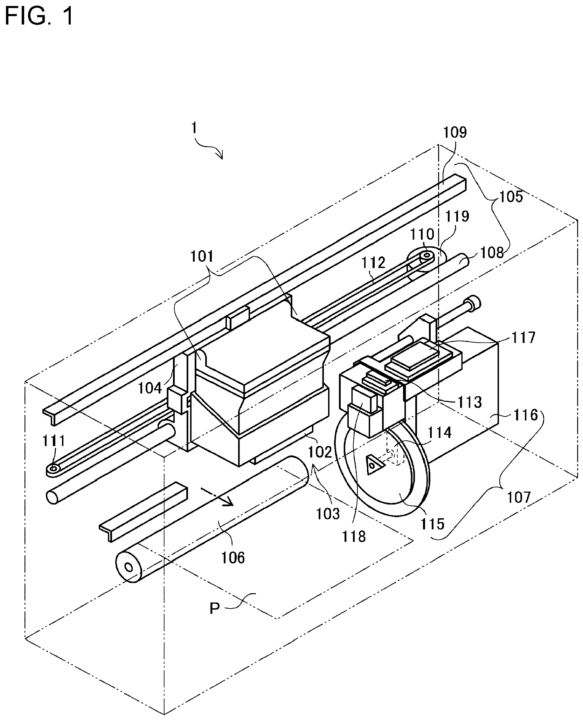

The image forming step can be implemented using, for example, the inkjet recording device illustrated in FIG. 1.

A configuration of an example of the inkjet recording device is illustrated in FIG. 1. As illustrated in the figure, this inkjet recording device 1 includes an ink cartridge 101, ink applying means (inkjet head) 102, a head unit 103, a carriage 104, a drive unit 105, a platen roller 106, and a purge device 107 as major constituent elements. Furthermore, although not illustrated in the figure, the ink cartridge 101 and the ink applying means 102 are connected by an ink flow path. The water-based ink is supplied to the ink flow path from the ink cartridge 101 in which the water-based ink is stored and the ink applying means 102 applies the water-based ink to the object to be subjected to image forming P.

The ink cartridge 101 may contain, for example, the water-based ink. A conventionally known unit may be used as a main unit of the ink cartridge.

Additionally, although not illustrated in the figure, the inkjet recording device 1 includes, in addition to the ink cartridge 101 containing the water-based ink, a set of four ink cartridges, each containing one of four colors of water-based ink; yellow, magenta, cyan, and black. An integrated ink cartridge, an interior of which is partitioned so as to form a water-based yellow ink storage reservoir, a water-based magenta ink storage reservoir, a water-based cyan ink storage reservoir, and a water-based black ink storage reservoir, may be used in place of the set of four ink cartridges.

The inkjet head 102, which is installed in the head unit 103, performs image forming on the object to be subjected to image forming P. The ink cartridge 101 and the head unit 103 are mounted on the carriage 104. The drive unit 105 moves the carriage 104 reciprocally in a linear direction. A conventionally known unit (see Japanese Unexamined Patent Application Publication No. 2008-246821) may be used as the drive unit 105. The platen roller 106 is arranged extending in a reciprocating direction of the carriage 104, and facing the inkjet head 102.

The purge device 107 sucks up defective ink containing air bubbles, and the like, that accumulates inside the inkjet head 102. A conventionally known device (see Japanese Unexamined Patent Application Publication No. 2008-246821) may be used as the purge device 107.

A wiper member 118 is arranged on the platen roller 106 side of the purge device 107 adjacent to the purge device 107. The wiper member 118 is formed in the shape of a spatula, and wipes a nozzle forming surface of the inkjet head 102 in conjunction with a movement of the carriage 104. In FIG. 1, a cap 117 covers a plurality of nozzles on the inkjet head 102, which is returned to a set position when recording finishes to prevent ink from drying.

In the inkjet recording device 1 according to this example, the ink cartridge 101 is mounted, together with the head unit 103, in one carriage 104. However, the present invention is not limited to this. In the inkjet recording device 1, the ink cartridge 101 may be mounted on a different carriage than the head unit 103. Furthermore, the ink cartridge 101 may be arranged and fixed inside the inkjet recording device 1, and not mounted on the carriage 104. In these embodiments, for example, the ink cartridge 101 and the head unit 103 mounted on the carriage 104 are connected by the ink flow path, which is a tube, or the like, and the ink is supplied to the head unit 103 from the cartridge 101. Furthermore, in these embodiments, a bottle shaped ink bottle may be used instead of the ink cartridge 101. In this case, it is preferable that an injection port for injecting ink from the outside into an interior be provided in the ink bottle.

The image forming step using this inkjet recording device 1 is, for example, implemented as follows. First the object to be subjected to image forming P is supplied from a side of, or below, the inkjet recording device 1. The object to be subjected to image forming P is introduced between the inkjet head 102 and the platen roller 106. A specified image is formed of water-based ink applied from the inkjet head 102 to an area of the introduced object to be subjected to image forming P. The object to be subjected to image forming P is ejected from the inkjet recording device 1 after the image forming. Mechanisms for supplying and ejecting the object to be subjected to image forming P have been omitted in FIG. 1 and are thus not illustrated.

Although the device illustrated in FIG. 1 uses a serial-type inkjet head, the present invention is not limited to this and thus, for example, the device may be one that uses a line-type inkjet head or a roll-to-roll. Note that the serial-type inkjet head is an inkjet head that prints while reciprocating the inkjet head in a width direction of an image forming object. A line-type inkjet head is an inkjet head that covers an entire width of the image forming object. Roll-to-roll is a method in which a roll-shaped image forming object is fed out, printed, and then wound back up into a roll shape.

The resin powder applying step may be performed manually or by an electrophotographic method. When performed manually, the resin powder can be applied to the region where water-based ink was applied using, for example, hands or instruments such as spoons, brushes, powder sieves, and the like. When performed using an electrophotographic method, the resin powder can be applied to the region where the water-based ink was applied using, for example, a conventionally known laser printer.

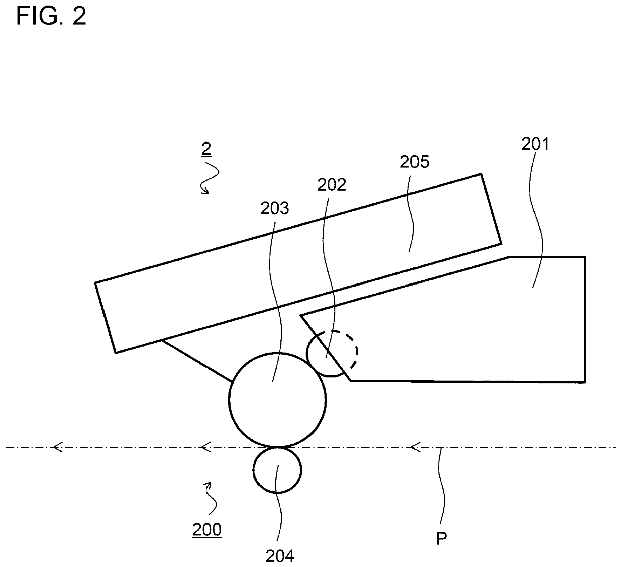

The electrophotographic method can be implemented, for example, using the laser printer (electrophotographic method) depicted in FIG. 2.

The laser printer 2 depicted in FIG. 2 is equipped with an image forming unit 200. The image forming unit 200 is equipped with a process cartridge 201 that transfers resin powder to the surface of the object to be subjected to image forming P that has been transported, and an exposure unit 205 that exposes the surface of the developing photoreceptor drum 203 of the process cartridge 201.

The process cartridge 201 has a developing roller 202, a developing photoreceptor drum 203, a transfer roller 204, and the like. The exposure unit 205 is equipped with a laser diode, polygon mirror, lens, reflector, and the like, and exposes the surface of the developing photoreceptor drum 203 by directing a laser beam toward the developing photoreceptor drum 203 based on image data input to the laser printer 2.

The developing photoreceptor drum 203 is positioned adjacent to the developing roller 202. The surface of the developing photoreceptor drum 203 is uniformly and positively charged by a charger, not illustrated, and then exposed by the exposure unit 205. The exposed portion of the developing photoreceptor drum 203 has a lower potential than the other portions, and an electrostatic latent image based on the image data is formed on the developing photoreceptor drum 203. Furthermore, the electrostatic latent image is developed into a developed image by supplying a positively charged resin powder from the developing roller 202 to the surface of the developing photoreceptor drum 203 on which the electrostatic latent image is formed.

The transfer roller 204 is positioned opposite the developing photoreceptor drum 203, and a negative transfer bias is applied by bias applying means not illustrated. With the transfer bias applied to the surface of the transfer roller 204, the developing image (resin powder) formed on the surface of the developing photoreceptor drum 203 is transferred to the surface of the object to be subjected to image forming P by sandwiching and transporting the object to be subjected to image forming P between the developing photoreceptor drum 203 on which the developing image (resin powder) is formed and the transfer roller 204 (transfer position).

The resin powder may be, for example, a charged resin powder, as described above. In the resin powder applying step, the region where the charged resin powder is applied may be slightly larger than the region where the water-based ink is applied. Slightly larger means, for example, 0.5% or more, preferably 1% or more, and more preferably 2% or more.

If the resin powder applying step does not use an electrophotographic method, for example, the resin powder does not necessarily contain the charge control agent and the release agent.

Thermal fixing in the thermal fixing step may be performed, for example, through contact with, or non-contact with, the object to be subjected to image forming. Examples of the contact method include methods that use heat rollers, commercially available hot presses, and the like. Examples of the non-contact method include methods that use ovens, belt conveyor ovens, dryers, and the like. The temperature of the heating member used in the thermal fixing is 100°C to 200°C, preferably 100°C to 150°C, and more preferably 110°C to 130°C.

When the resin powder applying step is performed by the electrophotographic method, for example, the thermal fixing step may be performed in a non-contact manner, and the thermal fixing step may be performed after the image forming step, followed by the resin powder applying step, followed by the thermal fixing step. When the resin powder applying step is performed by the electrophotographic method, non-contact thermal fixing of the region where the water-based ink is applied before the resin powder applying step can prevent contamination of the roller that applies the resin powder.

If the thermal fixing step is performed after the image forming step, the inkjet recording device 1 in FIG.1 also includes a heat treating unit, not illustrated. The heat treating unit may include, inside thereof, a contact heating member or a non-contact heating member. Examples of the contact heating member include heat rollers, hot plates, and the like. Examples of the non-contact heating member include ovens, belt conveyor ovens, dryers, and the like. The heat treating unit may be provided independent of the inkjet recording device 1.

A method for manufacturing the image formation according to the present invention is described next. The method for manufacturing the image formation according to the present invention includes the image forming step, and the image forming step is implemented by the image forming method according to the present invention.

An image forming system according to the present invention is described next. The image forming system according to the present invention includes an ink flow path, a resin powder housing section, ink applying means, and resin powder applying means, uses the ink applying means to apply water-based ink provided to the ink flow path to an object to be subjected to image forming, uses the resin powder applying means to apply the resin powder housed in the resin powder housing section to the object to be subjected to image forming so as to overlap an area to which the water-based ink was applied, and then supplies the water-based ink described in the above embodiment into the ink flow path.

The image forming system according to the present invention may be a combination of the inkjet recording device 1 in FIG. 1 and the laser printer 2 according to FIG. 2. The image forming system according to the present invention may be provided integrated with, or independent of, the inkjet recording device 1 and the laser printer 2.

### EXAMPLES

Examples according to the present invention are described next along with comparative examples. Note the present invention is neither limited nor restricted by the examples and comparative examples described below. Also, in the following description, "part" and "%" are based on mass unless otherwise specified. Furthermore, various types of physical properties were measured according to measurement methods described later.

(Water-based ink) 1. Preparation of pigment dispersion <Self-dispersing Bk> 40 g of carbon black "#2650" manufactured by Mitsubishi Chemical Co., Ltd. was mixed with 200 g of deionized water and then pulverized in a bead mill. A carboxyl group agent was added to this, and the mixture was oxidized by heating and stirring. Then, the resulting liquid was washed several times with a solvent, poured into water, rewashed repeatedly in water, filtered with a filter, and the self-dispersing Bk pigment shown in Table 1 was obtained. The average particle size of the carbon black contained in this self-dispersing Bk pigment, as measured using an "LB-550" manufactured by Horiba, Ltd. was 135 nm.

### <Resin dispersion Bk>

A mixture was obtained by adding pure water to 20 wt% of a pigment (carbon black) and 7 wt% (acid value: 175 mg KOH/g, molecular weight: 10000) of a styrene-acrylic acid copolymer neutralized with sodium hydroxide, for a total of 100 wt%, and then stirring and mixing. This mixture was put in a wet sand mill filled with 0.3 mm diameter zirconia beads, and dispersed for 6 hours. Then, the zirconia beads were removed using a separator, and the resin dispersion Bk shown in Table 1 was obtained by filtering with an acetate filter with a pore size of 3.0 µm. Note that styrene-acrylic acid copolymers are water soluble polymers commonly used as dispersions for pigments.

### <Resin dispersion M>

A mixture was obtained by adding pure water to 20 mass% of a pigment (C.I. pigment red 122) and 7 mass% (acid value: 50 mg KOH/g, molecular weight: 10000) of a styrene-acrylic acid copolymer neutralized with sodium hydroxide, for a total of 100 wt%, and then stirring and mixing. This mixture was put in a wet sand mill filled with 0.3 mm diameter zirconia beads, and dispersed for 6 hours. Then, the zirconia beads were removed using a separator, and the resin dispersion M shown in Table 1 was obtained by filtering with an acetate filter with a pore size of 3.0 µm. Note that styrene-acrylic acid copolymers are water soluble polymers commonly used as dispersing agents for pigments.

### 2. Fixing resin <Urethane resin>

A substance synthesized by causing glycols and polyisocyanates to react was used. The average particle size of this fixing resin, as measured using a dynamic light scattering particle size distribution analyzer ("LB-550" manufactured by Horiba, Ltd.) was 40 nm.

### <Acrylic resin>

44.7 wt% of Mowinyl 6899D (manufactured by Japan Coating Resin Co., Ltd.) was used.

### <Polyester resin>

30 wt% of elitel KT-8803 (manufactured by UNITIKA, Ltd.) was used.

### 3. Preparation of water-based ink

An ink solvent was obtained by uniformly mixing ingredients excluding a pigment in the water-based ink composition in Tables 1. Next, pigment was added to the ink solvent and mixed uniformly. Then, the water-based ink of Examples 1 through 15 shown in Table 1 and Comparative Examples 1 through 3 were obtained by filtering the resulting mixture with a cellulose acetate type membrane filter (pore size: 3.00 µm) manufactured by Toyo Roshi Kaisha, Ltd.

### 4. Preparation of overcoat (OC) ink

The fixing agent, wetting agent, and surfactant in the OC ink compositions in Table 1 were mixed uniformly. Then, the water-based ink (OC ink) of Comparative Example 3 shown in Table 1 was obtained by filtering the resulting mixture with a cellulose acetate type membrane filter (pore size: 3.00 µm) manufactured by Toyo Roshi Kaisha, Ltd.

### (Resin powder) 1. Step for preparing a charge control resin fine particle suspension

A charge control resin liquid was obtained by mixing and stirring 82.5 parts of MEK (methyl ethyl ketone) and 17.5 parts of a charge control resin (product name: "FCA-201PS" manufactured by Fujikura Kasei Co., Ltd.) to dissolve the charge control resin in the MEK. A charge control resin emulsion was obtained by mixing 100 parts of distilled water with 100 parts of this charge control resin liquid and then stirring for 20 minutes at a rotation speed of 16000 rpm (tip peripheral speed: 10.5 m/s) using a homogenizer (rotor stator-type, shaft 18F, rotor diameter 12.5 mm: model DIAX-900 manufactured by Heidolph). A charge control resin fine particle suspension with charge control resin fine particles dispersed therein was obtained by transferring the charge control resin emulsion to a 1L separable flask, heating and stirring at 60°C for 120 minutes while blowing nitrogen into the gas phase to volatilize and remove MEK. The solid content concentration of the charge control resin fine particle suspension was 22.9%. Furthermore, the volume average particle size (median diameter: D50) of the charge control resin fine particles in the charge control resin fine particle suspension was 110 nm.

### 2. Resin powder parent particle manufacturing step (1) Parent fine particle suspension (1-1) Preparation of binder resin liquid

A binder resin liquid was obtained by mixing 180 parts of a polyester resin (FC1565: Tg 62°C, Mn (number average molecular weight): 3600, Mw (weight average molecular weight): 50000, gel portion: less than 2 wt%, acid value: 6.0 KOH mg/g manufactured by Mitsubishi Rayon) with 720 parts of MEK, stirring, and then heating and stirring to a liquid temperature of 70°C.

### (1-2) Preparation of binder resin emulsion

A binder resin emulsion was obtained by mixing 900 parts of the obtained binder resin liquid, 900 parts of distilled water, and 9.0 parts of 1N aqueous sodium hydroxide solution, and then stirring and emulsifying for 20 minutes at a rotation speed of 15000 rpm (tip peripheral speed: 13.0 m/s) using a homogenizer (shaft 22F, rotor diameter: 16.5 mm).

### (1-3) Preparation of parent fine particle suspension

A parent fine particle suspension with parent fine particles dispersed therein was obtained by transferring the emulsion to a 2L separable flask, and heating and stirring at 75°C for 140 minutes while blowing nitrogen into the gas phase to remove MEK. The solid content of the parent fine particle suspension was 23.1 mass%. Furthermore, the volume average particle size (median diameter: D50) of the parent fine particles in the parent fine particle suspension was 299 nm. Additionally, the glass transition point (Tg) of the parent fine particles in the parent fine particle suspension was 58.3°C.

### (2) Resin powder parent particle suspension

Next, 1600 parts of a diluted parent fine particle suspension with a solid content concentration of 10% was prepared by mixing 57.6 parts of a 5% aqueous solution of nonionic surfactant (EPAN 785: polyoxyethylene polyoxypropylene block copolymer manufactured by DKS Co., Ltd.) with 692.6 parts of a parent fine particle suspension, and then diluting with 849.8 parts of distilled water. 35 parts of a 0.2N aluminum chloride aqueous solution were added to this diluted solution as a flocculant, then mixed at high speed for 10 minutes at a rotation speed of 8000 rpm using a homogenizer (shaft 22F, roller diameter: 16.5 mm). Then, parent fine particles were aggregated by heating the diluted solution to 45°C while stirring at a rotation speed of 300 rpm with 6 flat turbine blades (ϕ75 mm). Then, a resin powder parent particle suspension was obtained by adding 46 parts of a 0.2N sodium hydroxide solution as an aggregation terminator, heating to 90°C, and then stirring for approximately 6.5 hours. After filtering the obtained resin powder parent particle suspension, the filtered resin powder parent particles were washed with distilled water and put into a separable flask. 1600 parts of a resin powder parent particle suspension with a solid content of 10 mass% (160 parts as resin powder parent particles) were obtained by pouring distilled water into the particles to once again disperse the resin powder parent particles. The volume-based average particle size (Dv) of the resin powder parent particles was 8.1 µm.

### 3. Resin powder creation step (1) Imparting charge to resin powder parent particles

A mixture was prepared by mixing 7 parts of a charge control resin fine particle suspension with charge control resin fine particles dispersed therein (solid content: 22.9 mass%) (1.6 parts as charge control fine particles) with the 1600 parts of a resin powder parent particle suspension with a solid content of 10 mass% (160 parts as resin powder parent particles) in a 25°C water bath and stirring for 15 minutes at 200 rpm using an impeller (6-plate turbine two-stage blades: diameter 75 mm). Then, the mixture was filtered and a cake was washed with distilled water and filtered; this was repeated until the conductivity of the resulting filtrate became 4 µS/cm or less.

### (2) External addition processing

Next, 1 part of HVK2150 (hydrophobic silica manufactured by Clariant AG) and 1 part of NA50H (hydrophobic silica manufactured by Aerosil Co., Ltd.) were blended with 100 parts of adequately charged resin powder parent particles, and then stirred for 3 minutes at a rotation speed of 2500 rpm with a MECHANOMILL (manufactured by Okada Seiko Co., Ltd.). Then, a resin powder was obtained by removing course aggregates of hydrophobic silica with a sieve.

### Composition (one Example) Binder resin: 80 to 90 wt% Release agent: 3 to 10 wt% Charge control agent: 0 to 5 wt% External additive: 1 to 2 wt%

### <Examples 1 through 15 and Comparative Examples 1 through 3>

The fabrics of Examples 1 through 15 shown in Table 1 and of Comparative Examples 1 through 3 were obtained by performing the image forming described below.

### (Image forming)

Cotton ("MC1082" manufactured by COTTON HERITAGE Co., Ltd.) was used as the fabric. The water-based inks shown in Table 1 below were applied to the fabric (amount applied: 4.0 mg/cm²). Next, the water-based ink was then heated with hot air or a heated roller to thermal fix the water-based ink to the fabric. Furthermore, the resin powder prepared in the section "2. Resin powder parent particle manufacturing step" and "3. Preparation of water-based ink" was applied to the region where the water-based ink was applied, using a laser printer "HL-L2360DW" manufactured by Brother Industries, Ltd. modified to be as depicted in FIG. 2. Note that the amounts of the resin powder applied are the amounts shown in Table 1 below. Next, the water-based ink was then heated with hot air to thermal fix the water-based ink and the resin powder to the fabric. The thermal fusing was performed using a dryer at 110°C for 3 minutes. In Example 5, a heated roller was used to thermally fix the water-based ink instead of using a dryer. In Example 8, thermal fixing was not performed after the water-based ink was applied, but rather only after the resin powder was applied. In Comparative Example 1, a resin powder was not used. In Comparative Example 2, neither a water-soluble resin nor a resin emulsion was used. In Comparative Example 3, a resin powder was not used and an OC ink was used.

In Examples 8 and 9, the resin powder was applied by hand according to the following procedures instead of using a laser printer. First, the required amount of the resin powder was spread on a suitable resin film. This was applied onto fabric on which the water-based ink had been applied, and then the resin film was peeled off to transfer the resin powder to the fabric, and then thermal fixing was performed.

Evaluations of (a) bleeding, (b) abrasion resistance, (c) roller contamination, (d) fluffing, and (e) misalignment were performed with respect to the fabric of Examples 1 through 15 and Comparative Examples 1 through 3.

### (a) Bleeding evaluation

Solid printing was performed by ejecting water-based ink using an inkjet method. Visual evaluation was performed according to the following evaluation criteria.

### Bleeding evaluation Evaluation criteria A: Not present, C: Present

### (b) Abrasion resistance evaluation

Color migration to a white test cloth was evaluated according to the following evaluation criteria by setting the white test cloth in the probe of an "RT-200" JSPS-type friction tester manufactured by Daiei Kagaku Seiki Mfg. Co., Ltd., and rubbing an image forming (ink film) portion thereupon.

### Abrasion resistance evaluation: Evaluation criteria A: Absent B: Slightly present C: Present

### (c) Roller stain evaluation

The presence or absence of fabric drying after applying the water-based ink was checked to determine if the heated roller in the laser printer described above was contaminated.

### Roller contamination evaluation: Evaluation criteria A: Absent, C: Present

### (d) Fluffing evaluation

The recorded portion was rubbed reciprocally 10 times with a finger to see if fabric fluffing occurred.

### Fluffing evaluation: Evaluation criteria A: Absent B: Slightly present C: Present

### (e) Misalignment evaluation

Visually checked for misalignment of the water-based ink and resin powder.

### Misalignment evaluation: Evaluation criteria A: Absent B: Slightly present C: Present

Evaluation results for Examples 1 through 15 and Comparative Examples 1 through 3 are shown in Table 1.

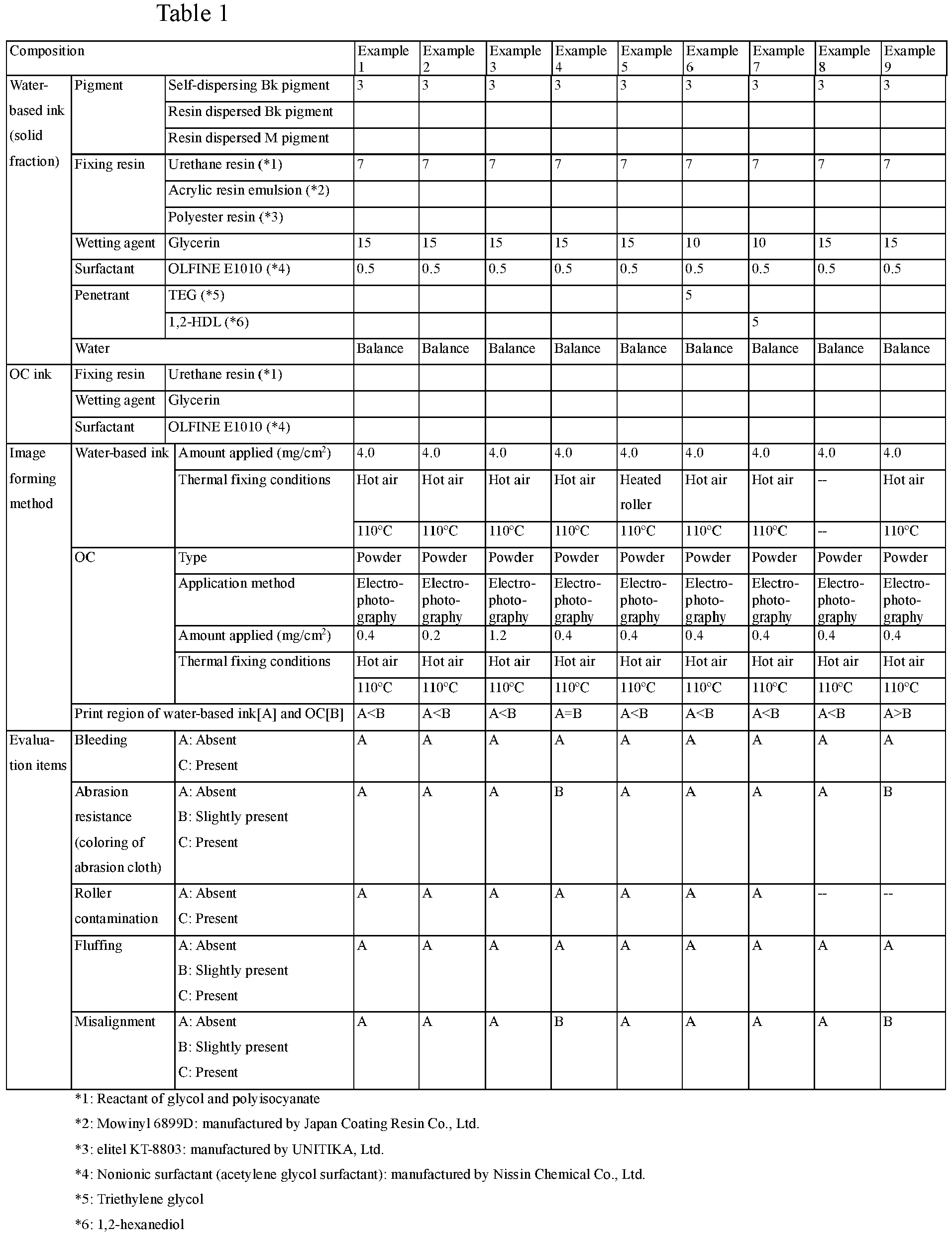

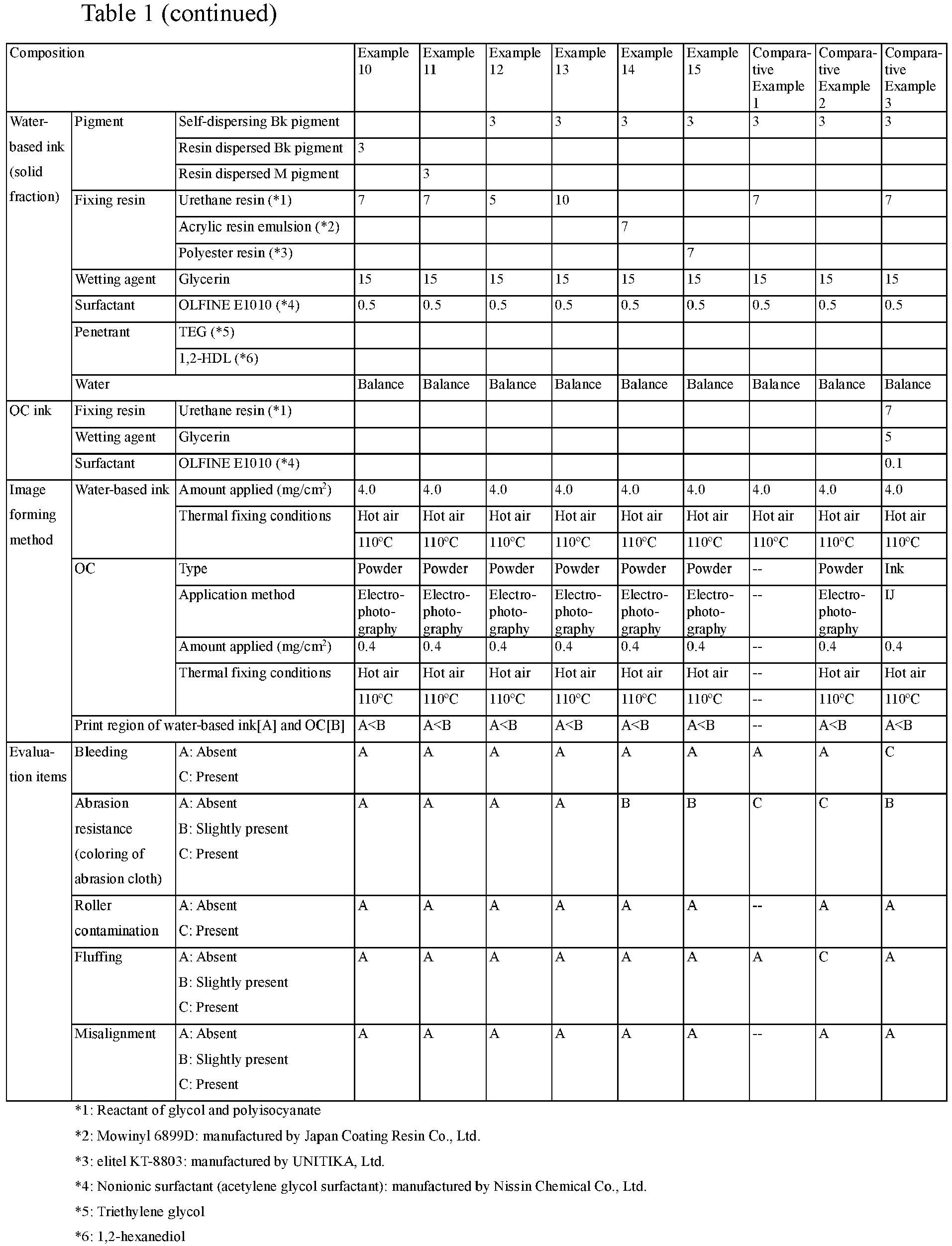

As shown in Table 1, Examples 1 to 15 had favorable results for both the bleeding evaluation and the abrasion resistance evaluation. In addition, the abrasion resistance evaluation was superior in Examples 1 to 3, 5 to 8, and 10 to 13, where the region where the water-based ink (A) and resin powder (B) were applied was such that A < B.

Comparative Examples 1-3 had inferior bleeding and abrasion resistance evaluation results. Specifically, Comparative Example 1, where resin powder was not applied, had an inferior abrasion resistance evaluation result. Comparative Example 2, in which the water-based ink did not contain a water-soluble resin or resin emulsion, demonstrated inferior abrasion resistance results. Comparative Example 3, which used an OC ink instead of the resin powder, had a poor bleeding evaluation results.

Some or all of the above embodiments and examples can be described as in the following appendices, but are not limited thereto. (Appendix 1) An image forming method, including: an image forming step of applying water-based ink to an object to be subjected to image forming by an inkjet method; a resin powder applying step of applying a resin powder to a region where the water-based ink has been applied (a first region); and a thermal fixing step of applying heat to the region where the water-based ink has been applied and a region where the resin powder has been applied (a second region), to thermally fix the water-based ink and the resin powder to the object, wherein the water-based ink contains a pigment and at least one of a water-soluble resin and a resin emulsion. (Appendix 2) The image forming method according to Appendix 1 wherein a ratio (X/Y) of an applied amount (X) of the water-based ink and an applied amount (Y) of the resin powder is 0.04 or more and 240 or less. (Appendix 3) The image forming method according to Appendix 1 or 2, wherein the water-soluble resin and the resin emulsion are one of urethane resin, polyester resin, and acrylic resin. (Appendix 4) The image forming method according to any one of Appendices 1 to 3, wherein the solid content of the water-soluble resin or the resin emulsion relative to the total amount of the water-based ink is 5 mass% or more and 10 mass% or less. (Appendix 5) The image forming method according to any one of Appendices 1 through 4 wherein an applied amount of the resin powder is 0.1 mg/cm² or more.(Appendix 6) The image forming method according to any one of Appendices 1 to 5, wherein the resin powder contains a thermoplastic resin. (Appendix 7) The image forming method according to any one of Appendices 1 to 6, wherein the resin powder is a charged resin powder. (Appendix 8) The image forming method according to Appendix 7, wherein the resin powder applying step is performed by an electrophotographic method, in the resin powder applying process, the region where the charged resin powder is applied (the second region) is 1% or more larger than the region where the water-based ink is applied (the first region), the thermal fixing step is performed by a non-contact method, and the thermal fixing step is performed after the image forming step, then the resin powder applying step is performed, and then the thermal fixing step is performed. (Appendix 9) A method for manufacturing an image-formed article that includes an image forming step, wherein the image forming step is implemented using the image forming method according to any one of Appendices 1 through 8. (Appendix 10) An image forming system, comprising: an ink flow path, a resin powder housing section (a resin powder reservoir), ink applying means, and resin powder applying means, wherein the ink applying means is used to apply the water-based ink that was provided to the ink flow path to an object to be subjected to image forming, the resin powder applying means is used to apply the resin powder housed in the resin powder housing section to the object to be subjected to image forming so that the resin powder overlaps a region where the water-based ink was applied (the first region), and the water-based ink described in any one of Appendices 1 to 4 is supplied to the ink flow path.

### FIELD OF INDUSTRIAL APPLICABILITY

As described above, with the image forming method according to the present invention, both bleeding evaluation and abrasion resistance evaluation are excellent. The image forming method according to the present invention is broadly applicable to forming images on various types of objects to be subjected to image forming.

### DESCRIPTION OF THE SYMBOLS

- 1: Inkjet recording device
- 101: Ink cartridge
- 102: Ink applying means (inkjet head)
- 103: Head unit
- 104: Carriage
- 105: Drive unit
- 106: Platen roller
- 107: Purge device
- 2: Laser printer
- 200: Image forming unit
- 201: Process cartridge
- 202: Developing roller
- 203: Developing photoconductive drum
- 204: Transfer roller
- 205: Exposure unit

## Claims

1. An image forming method, comprising:
an image forming step of applying water-based ink to a first region of an object to be subjected to image forming by an inkjet method;
a resin powder applying step of applying a resin powder to a second region of the object, the first region and the second region at least partially overlapping each other; and
a thermal fixing step of applying heat to the first region and the second region to thermally fix the water-based ink and the resin powder to the object,
wherein the water-based ink comprises a pigment and at least one of a water-soluble resin and a resin emulsion.

2. The image forming method according to claim 1, wherein a ratio (X/Y) of an applied amount (X) of the water-based ink to an applied amount (Y) of the resin powder is 0.04 or more and 240 or less.

3. The image forming method according to claim 1 or 2, wherein the water-soluble resin and the resin emulsion are each a urethane resin, a polyester resin, an acrylic resin or a combination thereof.

4. The image forming method according to any one of claims 1 to 3, wherein a total solid content of the water-soluble resin and the resin emulsion relative to an amount of the water-based ink is 5 mass% or more and 10 mass% or less.

5. The image forming method according to any one of claims 1 to 4, wherein an applied amount of the resin powder is 0.1 mg/cm² or more.

6. The image forming method according to any one of claims 1 to 5, wherein the resin powder comprises a thermoplastic resin.

7. The image forming method according to any one of claims 1 to 6, wherein the resin powder is a charged resin powder.

8. The image forming method according to claim 7, further comprising an additional thermal fixing step which is performed after the image forming step and before the resin powder applying step,
wherein
the resin powder applying step is performed by an electrophotographic method, in the resin powder applying process, the second region is 1% or more larger than the first region, and
each of the thermal fixing step and the additional thermal fixing step is performed by a non-contact method.

9. A method for manufacturing an image-formed article, comprising the image forming method according to any one of claims 1 to 7, to obtain the image-formed article.

10. An image forming system comprising:
an ink flow path;
a resin powder reservoir;
ink applying means configured to apply a water-based ink that was provided to the ink flow path to a first region of an object to be subjected to image forming; and
resin powder applying means configured to apply a resin powder housed in the resin powder reservoir to a second region of the object, the first region and the second region at least partially overlapping each other,
wherein
the water-based ink comprises a pigment and at least one of a water-soluble resin and a resin emulsion.

11. The image forming system according to claim 10, wherein a ratio (X/Y) of an applied amount (X) of the water-based ink and an applied amount (Y) of the resin powder is 0.04 or more and 240 or less.

12. The image forming system according to claim 10 or 11, wherein the water-soluble resin and the resin emulsion are each a urethane resin, a polyester resin, an acrylic resin or a combination thereof.

13. The image forming system according to any one of claims 10 to 12, wherein a total solid content of the water-soluble resin and the resin emulsion relative to an amount of the water-based ink is 5 mass% or more and 10 mass% or less.
